# EUROPEAN PATENT SPECIFICATION

(11) **EP 1 669 385 B1**
(45) Date of publication and mention of the grant of the patent: **04.05.2011**
(21) Application number: 05025866.4
(22) Date of filing: 28.11.2005
(51) Int. Cl.: C08G 18/80, C09D 175/04, C08G 18/12, C08G 18/08

(54) **Continuous method for manufacturing an acid functional blocked solid isocyanate**
Kontinuierliches Verfahren zur Herstellung von säurefunktionellen festen blockierten Isocyanaten
Méthode de préparation en continu d'un isocyanate solide bloqué et fonctionalisé par un acide

(30) Priority: 08.12.2004 US 7015
(43) Date of publication of application: 14.06.2006
(73) Proprietor: Bayer MaterialScience LLC, Pittsburgh, PA 15205 (US)
(72) Inventor: Fäcke, Thoma, Bridgeville, PA 15017 (US); Vidra, Eric J., Pittsburgh, PA 15021 (US); Halpaap, Reinhard, 51519 Odenthal (DE); Laue, Jörg, 41541 Dormagen (DE)
(74) Representative: Klimiuk, Meike

(56) References cited:
- EP-A- 0 104 424
- WO-A-99/06461
- DE-A1- 2 708 611
- US-A- 4 098 933
- US-A- 4 480 008
- US-A- 5 538 759
- US-A- 5 811 190
- US-A1- 2003 199 632

## Description

### BACKGROUND OF THE INVENTION

### 1. Field of the Invention

The invention relates to a method of producing solid blocked isocyanates with at least one additional carboxylic functionality, which are useful as a crosslinker for powder coatings.

### 2. Description of the Prior Art

Solid blocked Isocyanates are well known in powder coatings. For example, solid blocked isocyanates with additional functionality of at least one carboxylic group have been developed to improve chemical resistance (U.S. Patent No. 4,480,008) or to obtain consistent matte effects (EP 0 104 424). The latter is important in powder coatings, because alternative techniques to achieve low gloss surfaces in powder coatings suffer from the inherent difficulties in their use or perform poorly.

For instance, the so called dry blending techniques disclosed in U.S. Patent No. 3,842,035 include powder coating composition that contain one crosslinker and two different resins with significantly different gel times. In addition to this method being expensive, the recycling of overspray of such materials leads to inconsistent gloss in the final coating.

U.S. Patent No. 3,947,384 discloses cyclic amidines for solving the above-mentioned problems. The cyclic amidines crosslink certain polycarboxylic acids. The use of these resins is restricted mostly to epoxide containing resins which do not provide good outdoor weathering.

CA 2001300 C discloses another approach, which uses epoxy compounds with di-, tri- or tetrakis-(β-carboxyethyl)-cyclohexanones or cyclopentanones. The matting effect in this cases is attributed to the different reactivities of the aliphatic carboxylic groups of the crosslinker versus the aromatic carboxylic groups in the polyester resins.

Another procedure used to obtain matte effects in powder coatings utilizes the above mentioned crosslinkers that contain carboxylic groups and blocked isocyanates as disclosed in EP 0 104 424. To obtain the matte effect additional requirements have to be met by this compound, i.e., it must contain an acid number of 20-150 mg KOH/g, and a ratio of NCO content to acid number of 0.075 to 0.340 has to be met.

The synthesis of these hardeners can be performed by the simultaneous addition of blocking agent and hydroxycarboxylic acid to the polyisocyanate. Alternatively it is disclosed that a two step process can be used that involves a) the reaction of the polyisocyanate with the hydrocarboxylic acid and a subsequent addition of blocking agent or b) by reaction of the polyisocyanate with the blocking agent and a subsequent addition of the hydroxycarboxylic acid. It is recommended to use a solvent. See for example EP 0104 424 and U.S. Patent Nos. 3,959,348 and 4,098,933 for further details of the synthesis procedures.

U.S. Patent No. 3,959,348 discloses the reaction of hydroxycarboxylic acids with mixtures of aromatic polyisocyanates, while U.S. Patent No. 4,098,933 discloses a method of making a water soluble or water dispersible polyisocyanate by reacting a polyisocyanate in a first stage with a blocking agent. In a second stage a solution in water of an isocyanate reactive compound or a polyether is added to improve the water solubility of the product. In the final stage the product is dispersed in water.

As mentioned, U.S. Patent No. 4,480,008 discloses crosslinkers for powder coatings which contain two different functional groups for improved chemical resistance. DE-OS 2 708 611 is cited herein for methods of manufacturing these crosslinkers. DE-OS 2 708 611 discloses a method of synthesizing polyurethane prepolymers containing carboxylic acid groups in a two step process. Example three discloses specifically that dimethylolpropionic acid is reacted in a first stage with an aromatic polyisocyanate. In the second stage the product is reacted with ε-caprolactam. In the other examples tartaric acid is used as a Hydroxycarboxylic acid.

It is also known that carboxylic groups are also able to react with isocyanate groups The reaction produces an amide and carbon dioxide. The latter is a gas that leads to severe foaming. This side reaction becomes increasingly more dominant at higher reaction temperatures. Additionally, the introduction of carboxylic groups can also be attributed to higher viscosities in the end product. These two effects lead to tremendous difficulties in producing the crosslinkers that are disclosed in EP 0 104 424. Although it is feasible to make the crosslinkers in a lab scale batch process, the synthesis at larger scale typically fails for two reasons. At high temperatures the acid-isocyanate reaction becomes dominant and severe foaming is observed. The product degrades and becomes useless. On the other hand, at lower temperatures the reaction mixture becomes too viscous to be stirred in a conventional production batch reactor.

Thus, there is a need in the art to provide a method of making solid blocked isocyanates containing at least one additional carboxylic acid functional group such that the product meets the quality achieved in lab reactions. Specifically, the method should exhibit minimal foaming while being able to handle the reasonably high viscosities that occur during processing.

### SUMMARY OF THE INVENTION

The present invention provides a continuous process for making an acid functional blocked Isocyanate. The process includes continuously feeding and mixing
a) one or more polyisocyanates;
b) one or more hydroxycarboxylic acids; and
c) one or more other isocyanate blocking agent;
in a reactor at from 100-240°C.

The present invention also provides acid functional blocked Isocyanates prepared according to the method described above.

### DETAILED DESCRIPTION OF THE INVENTION

Other than in the operating examples, or where otherwise indicated, all numbers or expressions referring to quantities of ingredients, reaction conditions, etc. used in the specification and claims are to be understood as modified in all instances by the term "about."

The present method is directed to a continuous process that can be performed, without limitation, in an extruder, a static mixture, a tube reactor, a reaction injection molding (RIM) machine or other similar continuously fed reactor.

The solution to the problem of foaming and handling high viscosity was surprisingly found in a continuous process that allows for manufacturing of a consistent product that meets the quality of similarly conducted laboratory scale reactions. The foaming problems could be surprisingly resolved and the high viscosity of the product leading to severe stirring difficulties in a batch process could be resolved by using a continuous reactor design.

The method disclosed herein provides for the manufacture of solid compounds having more than one blocked isocyanate per molecule, an acid number ranging from 20 to 150, in some cases from 25 to 80 and a ratio of NCO content to acid number of 0.075 to 0.340, in some cases from 0.100 to 0.300. The solid blocked isocyanates are suitable for use as crosslinkers for matte powder coatings containing hydroxyl functional polymers and polyepoxides.
The present invention is thus directed to a continuous process for making an acid functional blocked Isocyanate by continuously feeding and mixing
a) one or more polyisocyanates;
b) one or more hydroxycarboxylic acids; and
c) one or more other isocyanate blocking agent;
in a reactor.

The temperature in the reactor can be at least 100, in some cases 110, and in other cases at least 125°C and can be up to 240, in some cases up to 200, and in other cases up to 175°C. The temperature in the reactor can be any value or range between any of the values recited above.

Formula I represents a non limiting example of materials that can be prepared according to the present process.

(HO₂C)ₘ-X-[(O-(C=O)-NH)ₙ-R-(NH-(CO)-Z)ₚ]_{q} (I)

In formula I:
- X: represents a (q.n+m) functional organic group, which can be a C₁ to C₂₈ linear, branched, or cyclic aliphatic, aromatic or araliphatic linking group having (m+q) functional groups or a polyester with a number average molecular weight of 154 to 1500 with a formal elimination of the OH and acid functional groups;
- R: represents a (n+p) functional organic group and can be a C₂ to C₁₈ linear, branched, or cyclic aliphatic, aromatic or araliphatic linking group having (n+p) functional groups;
- Z: represents a residue from an isocyanate blocking agent with the active hydrogen removed and can be a C₁-C₃₂ linear, branched or cyclic aliphatic or aromatic group containing an active hydrogen group with the active hydrogen removed;
- m: represents an integer number ranging from 1-3, and can be 1 or 2 and in some cases 1;
- n: represents an integer number ranging from 1-4, and can be 1-3, in some cases 1 or 2 and in other cases 1;
- p: represents an integer number ranging from 1-5, and can be 1-4, in some instance 1-3, in other instance 2-4, in some cases 1 or 2 and in other cases 1; and
- q: represents an integer number ranging from 1-4, and can be 1-3, in some cases 1 or 2 and in other cases 1; and the sum of p+q is larger than 2.

In an embodiment of the invention:
- X: represents a linear or branched aliphatic, cycloaliphatic, arylaliphatic or aromatic group, containing 1-28, in some cases 2- 28, and in other cases 1-17 carbon atoms. X can also be a polyester with a number average molecular weight of 154 to 1500 with a formal elimination of the OH and acid functional groups.

In another embodiment of the invention:
- R: represents a linear or branched aliphatic, cycloaliphatic, arylaliphatic or aromatic group, containing 2-18, in some cases 6-13 carbon atoms which can optionally be substituted by 1 to 4 chlorine atoms or methoxy groups or further contain 1-2 oxygen atoms within the backbone chain

Further descriptions regarding X and R can be ascertained from the description of the starting materials described below.

In an embodiment of the invention, the blocking agent is one or more compounds according to the formula

R²-Z

where R² is selected from C₂ to C₂₄ linear, branched, or cyclic aliphatic, aromatic or araliphatic groups and Z is an active hydrogen containing group selected from hydroxyl, mercaptan, oxime, lactam, triazole, pyrazole, secondary amines, malonic esters, acetylacetic acid esters, and cyclopentanone esters.

The hardeners that can be manufactured according to this process can be made from polyisocyanates containing n+p isocyanate groups, hydroxycarboxylic acids containing n hydroxy- and m carboxylic groups and blocking agents ZH that are capable to react with isocyanate groups.

Useful isocyanates are disclosed in the well known standard literature, for example in "Methoden der Organischen Chemie" (Houben-Weyl), Bd. 14/2, 4. Auflage, Georg Thieme Verlag, Stuttgart 1963, page 61-70 and W.Siefken, Liebigs Ann. Chem. 562, pages 75-136, the relevant portions of which are incorporated herein by reference.

Useful polyisocyanates include, but are not limited to 1,2-ethylene-diisocyanate, 1,4-tetramethylenediisocyanate, 1,6- hexamethylenediisocyanate, 2,2,4- and 2,4,4-trimethyl-1,6-hexamethylenediisocyanate, 1,12-dodecandiisocyanate, ω,ω-diisocyanatodipropylether, cyclobutan-1,3-diisocyanate, cyclohexan-1,3- and 1,4-diisocyanate, 2,4- and 2,6-diisocyanato-1-methylcylcohexane. 3-Isocyanatomethyl-3,5,5-trimethylcyclohexylisocyanate ("isophoronediisocyanate"), 2,5- and 3,5-bis-(isocyanatomethyl)-8-methyl-1,4-methano,decahydronaphthathalin, 1,5-, 2,5-, 1,6- and 2,6-bis-(isocyanatomethyl)-4,7-methanohexahydroindan, 1,5-, 2,5-, 1,6- and 2,6-bis-(isocyanato)-4,7-methanohexahydroindan, dicyclohexyl-2,4'- and 4,4'-diisocyanate, ω,ω-diisocyanato-1,4-diethylbenzene, 1,3- and 1,4-phenylenediisocyanate, 4,4'-diisocyanatodiphenyl, 4,4'-diisocyanato-3,3'-dichlorodiphenyl, 4,4'-diisocyanato-3,3'methoxy-diphenyl, 4,4'-diisocyanato-3,3-dimethyl-diphenyl, 4,4'-diisocyanato-3,3'-diphenyl-diphenyl, naphthalene-1,5-diisocyanate, 2,4-and 2,6-toluenediisocyanate, N-N'-(4,4'-dimethyl-3,3'-diisocyanatodiphenyl)-uretdion, m-xylylene-diisocyanate, 2,2'-, 2,4'- and 4,4'-dicyclohexylmethane, 2,4,4'-triisocyanatano-diphenylether, 4,4',4"-triisocyanatotriphenylmethant, tris(4-isocyanatophenyl)-thiophosphate and all the mixtures.

In addition polyisocyanates that are obtained by reacting the above mentioned di- and triisocyanates with multifunctional alcohols containing 2-12 carbon atoms and 2-6 hydroxy groups can be used as well. Also polyisocyanates that can be obtained by oligomerization, containing any of the following groups: isocyanurate, uretdione, allophanate, biuret, uretonimin and urea can be used in the invention.

In an embodiment of the invention the isocyanates are 1,6-hexamethylenediisocyanate, isophoronediisocyanate and 2,2'-, 2,4'- and 4,4'-dicyclohexylmethane or mixtures thereof as well as products made of these diisocyanates by oligomerization, containing any of the following groups: isocyanurate, uretdione, allophanate, biuret, uretonimin and urea.

Hydroxycarboxylic acids that can be used in the invention include polymers containing OH and acid groups, a non-limiting example being those based on polyesters. Also polyester oligomers, available by condensation of Trimellithacidanhydride and C₂-C₁₅-diols can be used. Also low molecular weight compounds such as glycolic acid, salicylic acid, malic acid, 2,3-dihydroxy butanedioc acid, bis-(4-hydroxyphenyl)-alkanoic acids, e.g. bis-(4-hydroxyphenyl)-acetic acid and dialkyolalkanoic acids, e.g. dimethylolpropionic acid, dimethylolbutyric acids, dimethylolhexanoic acid and combinations thereof can be used.

Also mixtures of monomeric hydroxycarboxylic acids, or mixtures of monomeric hydroxycarboxylic acids with polymers containing OH and acid groups can be used in the invention.

In an embodiment of the invention, the hydroxycarboxylic acid is dimethylolpropionic acid.

Alcohols e.g. methanol, ethanol, cyclohexanol, and phenol can be used as a blocking agent in the invention. Also oximes, mercaptans, lactams (gamma-pyrrolidone, laurinlactam, epsilon-caprolactam), triazoles, dimethyl pyrazole, secondary amines such as diisopropyl amine and benzyl-tert-butyl amine, cyclopentanone-α-ethyl ester, and also malonic esters and acetylaceticacid esters can be used as a blocking agent. Additional blocking agents are disclosed in 'Methoden der Organischen Chemie' (Houben Weyl), Bd. 14/2, 4th Edition, Georg Thieme Verlag, Stuttgart 1963, page 61), the relevant portions of which are incorporated herein by reference. In an embodiment of the invention, epsilon-caprolactam is the blocking agent.

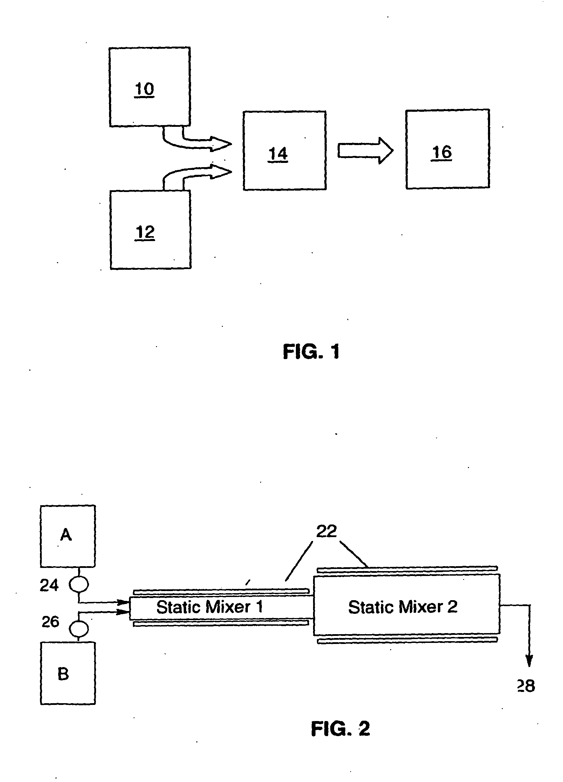

The process to manufacture the types of solid materials according to the invention can be carried out in any suitable continuous manufacturing process. As a non-limiting example, at least two components, 10 and 12 are mixed in mixing unit 14 as depicted in FIG. 1. Any suitable mixing unit can be used, for example, the mixing unit can be as simple as a Y-shaped tube or can be a mix head, i.e., a number of designs are possible. The Mixing Elements in the mix head promote mixing by controlling the mass flow for increased mixing of the components. Also active moving mixing elements are useful, e.g. stirred devices, which are especially useful when high viscosities are present. When the viscosities of the components are very different high shear creating elements are suitable, e.g. jet dispersers and the like.

ln an embodiment of the present process, a), b) and/or c) are mixed using a mixing element selected from at least one Y-shaped tube, a mixing unit with at least one static mixer element, a mixing unit with actively stirring mixing elements and combinations thereof.

Once the two components are mixed the material can be placed directly on belt 16. In this case it is possible, but not necessary to transport the material on the belt through an oven (not shown).

In another embodiment of the invention, the mixed material is pumped through a tube, which may or may not contain static mixing elements to improve the mixing process and heat dissipation. Alternatively an active moving element in the tube can be used for additional mixing. An extruder is such a device that contains an active moving mixing element, which is called in this case an extruder screw. Several screw elements can be used to improve mixing, improve material flow or control overall flow rates and residence times.

In the present invention, one component includes the polyisocyanate mentioned above or a mixture of these and another component includes the hydroxycarboxylic acid and the blocking agent. When the two components consist of more than one individual material they have to be premixed in a storage tank or the like. In the case of two miscible liquids this is usually done by a mixing device (e.g. stirrer) in the storage tank. If one of the materials is a solid, it is dissolved into the other raw material, which is a liquid. In some cases It is favorable to use higher temperatures to promote the solution making process. Also higher temperatures are favorable to promote the stability of such a solution.
In some cases hand higher temperatures can degrade the solution over time. Temperatures of 20-160°C can be used to prepare the solution, in some cases the mix temperature is from 20-100°C. The storage of such a solution can be done at a temperatures of from 20-160°C and in some cases from 20-70°C.

It is also possible to charge the components all individually, which can be beneficial regarding the overall process efficiency, because fewer solution preparation steps are required. Materials that are solid at ambient conditions can be charged as powders by the use of powder feeders or can be used as molten liquids.

The addition of the (mixture of) polyisocyanate, the blocking agent and the hydroxy carboxylic acid can be performed in any order. The blocking agent and the hydroxycarboxylic acid can be dissolved in each other first in a pre-stage process and then charged to the polyisocyanate. It is also possible to charge blocking agent and the hydroxycarboxylic acid in the reactor first and dissolve them in each other in situ, followed by addition of the polyisocyanate. It is also possible to charge the polyisocyanate and add any of the two other components (blocking agent, hydroxycarboxylic acid) stepwise or together.

In another embodiment, the blocking agent is reacted with the polyisocyanate first and then the hydroxy carboxylic acid is added. Alternatively, the hydroxy carboxylic acid can be reacted with the polyisocyanate and then the blocking agent can be added.

If a mixture of polyisocyanates is used, one of the polyisocyanates can be reacted first with the blocking agent and/or the hydroxy carboxylic acid in a pre-stage with subsequent reaction with the remaining components in a one step process.

In an embodiment of the invention, a three step process can be used. In this embodiment, a pre-stage mixture is prepared from the polyisocyanates with the blocking agent and/or the hydroxy carboxylic acid and the hydroxy carboxylic acid and/or the blocking agent and the remaining isocyanate is added in the last step. The order of addition can be reversed.

The different orders of addition can be performed partially in separate steps in a batch type mode or in some cases in a continuous fashion.

In an embodiment of the invention, an extruder setup is used because it can provide the largest degree of freedom, due to such a device usually having several addition ports where the components can be added.

The temperatures utilized in the present method will depend on the specific materials that are utilized. Aromatic isocyanates usually require lower temperatures than aliphatic isocyanates due to their inherent higher reactivity. Additionally, catalysts can be used to increase the speed of the reaction. Usually the components that are charged are preheated just prior to there addition, to optimize the reaction time in a continuous reactor. When solid materials are used they can be preheated above their melting point. When an extruder type of equipment is used solid materials can be melted in the extruder. In this case a powder feeder can be utilized instead of a pump to adjust the rate the material is added.

When no catalyst is used, all of the components are added at one time in the continuous process and minimal mixing temperatures are required to ensure a consistent reaction start.

When aromatic isocyanates are used the minimal mixing temperature is above 40°C, when aliphatic isocyanates are used the minimal mixing temperature is above 80°C. When catalysts are used, further temperature reduction is possible.

The temperature settings of the continuous reactor serve two purposes:
a) adjust a minimum reaction temperature to support the reaction of the components, and
b) control the exotherm heat in the process to avoid overheating and degradation.

Depending on the reaction setup different temperature settings in the reactor can support the two purposes. An optimum temperature range of the reaction mixture in the reactor can be from 100-240°C, in some cases from 120-200°C. It is expected that a certain temperature profile is created over the reaction time, however, short variations exceeding the temperature limit of 220°C may occur.

The settings for different areas where the above described temperatures are experienced can be significantly different, depending on the heat dissipation in the device itself. After a certain initial time during the setup of the process the mass flows and heat dissipation can change. It is desirable to maintain stable process conditions regarding mass flow and heat temperature profile during the process. Typically, these variables are controlled by product characterization temperature sensors that are incorporated in the continuous reactor and residence times.

The discharge temperature of the product can easily be measured and can range from 100-220°C, in some cases from 140-190°C.

Known catalysts that promote urethane formation can be used in the process. Suitable catalysts include, but are not limited to Lewis acids e.g. dialkyltindicarboxylates (dibutyltindilaurate, dibutyltindioctoate, dioctyltindioctoate, dioctyltindilaurate), monoalkyltintricarboxylates, trialkyltinmonocarboxylates, zinc carboxylates, bismuth salts, dialkyltin dicarboxylates, as well as aliphatic and aromatic amines (e.g. N,N-Dimethyl-Benzylamine). Catalysts are typically used at a level of from 0.00001- 1wt.%, in some cases from 0.02-0.3 wt.%, based on the resulting composition.

The acid functional blocked Isocyanate resulting from the above-described process can be used in powder coating compositions. As such a powder thermosetting composition can be prepared by dry blending a resin and/or functional polymer containing active-hydrogen containing groups that are reactive with isocyanate groups, the present acid functional blocked Isocyanate as a crosslinking agent, and optionally additives, such as fillers, pigments, flow control agents, degassing agents and catalysts, in a blender, as a non-limiting example a Henshel blade blender. The blender is operated for a period of time sufficient to result in a homogenous dry blend of the materials charged thereto. The homogenous dry blend is then melt blended in an extruder, typically a twin screw co-rotating extruder, operated within a temperature range of 80°C to 140°C. The resulting mixture is cooled and milled to an average particle size of from, for example, 15 to 30 microns.

The active-hydrogen containing groups in the resin and/or functional polymer containing active-hydrogen containing groups can include one or more OH groups, one or more SH groups, one or more primary amines, one or more secondary amines, and combinations thereof.

The acid functional blocked Isocyanate according to the invention for powder coatings are suitable for the coating of substrates made of wood, metal, plastic, glass, textiles or mineral substances, and/or already coated substrates made of said materials, or substrates consisting of any desired combinations of said materials. Applications in the industrial coating of MDF boards or preassembled higher-quality goods already containing temperature-sensitive structural components, e.g. electronic componentry, as well as the coating of furniture, coils, everyday objects, motor vehicle bodywork and associated add-on parts, may be mentioned in particular here.

The present invention is more particularly described in the following examples, which are intended to be illustrative only, since numerous modifications and variations therein will be apparent to those skilled in the art. Unless otherwise specified, all parts and percentages are by weight.

### Example 1a

### Continuous process using a static mixer

The setup shown in Fig. 2 was used to synthesize an acid functional ε-caprolactam blocked isocyanate suitable for matte powder coatings. Two containers, A and B were used to prepare the reactive components, two metal tubes with mixing elements (static mixers 1 and 2) equipped with a heating/cooling thermostat 22 and a discharge unit 28 which was a cooling belt. The static mixer 1 had a length of 118 cm and a diameter of 2 cm. Static mixer 2 had a length of 2 meters and a diameter of 4 cm.

In container A a 3.08:1 mixture of isophoronediisocyanate to hexamethylenediisocyanate was prepared which (hereinafter component A). In container B a 1.68:1 solution of dimethylolpropionic acid to ε-caprolactam was kept at 50 °C (hereinafter, component B). Two pumps (24 and 26) were used to adjust the feed ratio and the feed rate of the components stored in containers A and B respectively. The feed ratio was set at 1.14:1 of component A: component B.

The temperature of the thermostat of Mixer 1 was set to 100-120 °C and the thermostat of Mixer 2 was set to 90-110 °C. The temperature at the beginning of Mixer 1 was set to 95 °C. The temperature of the product at the discharge was measured 167-187 °C depending mostly on the temperature set point of the thermostat of mixer 2. The final product had a NCO content of 1.5%-1.9 wt.%, a Tg of 60-63 °C and an acid number of ca. 68-70 mg KOH/g.

### Example 1b

### Evaluation of the crosslinker of Example 1a.

The material obtained in Example 1a was used in a powder coatings formulation, that utilized a polyesterpolyol (RUCOTE^{®} 194, Bayer Material Science, Pittsburgh, PA) as resin, an additional crosslinker (an epoxide - ARALDIT^{®} 910, Ciba specialty Chemicals, Basel, Switzerland) and other ingredients listed in the table below. The weight amounts used and the function of the ingredients are given in the following table. Additionally the extrusion conditions are also provided.

| | | |
|---|---|---|
| RUCOTE^{®} 194 | 46.0 | Resin |
| Crosslinker of Example 1 a | 14.6 | Matte Crosslinker |
| ARALDIT^{®} PT 910 | 2.4 | Additional Crosslinker |
| Carbon black | 1.5 | Pigment |
| Sachtleben^{™} micro¹ | 33.5 | Filler |
| Benzoin | 0.5 | Degassing agent |
| RESIFLOW^{®} PV 88² | 1.5 | Leveling Agent |
| | | |
| Premixing | 30" 2000 Upm | |
| Extrusion³ | 100°C/120°C/150°C | |
| number of extrusion | 1 | |
| Mill | ACM⁴ | |

| | | |
|---|---|---|
| ¹ Sachtleben Chemie GmbH, Duisburg, Germany ² Estron Chemical, Inc., Calvert City, KY ³ Buss PLK 46 twin screw extruder set at 100 rpm and the temperatures indicated for each zone ⁴ air classifier mill | | |

The table below shows powder coating formulations and extrusion conditions used to test the matte powder crosslinkers made under the process conditions shown in the previous table.

The following rating for acetone resistance was used. When the coating film did not pass 50 double rubs with an acetone soaked pad, the rating assigned was a negative number between 1 and 50. For example, a -20 would indicate that the film was destroyed after 20 acetone double rubs. If the film passed 50 acetone double rubs, the film was rated after one minute flash off time to scratching with a fingernail according to the following scale:
- 0:: no damage
- 1:: some damage but film did not peel
- 2:: film could be removed with a fingernail.

Also, the gloss of the film was rated at the spot where the double rubs were performed according to the following scale:
- lm:: slight matting compared to original
- m:: significant matting observed.

| **Test results** | | | |
|---|---|---|---|
| **Gradient-oven panel** | | | |
| Curing conditions | Film thickness [µm | Gloss 60° / 85°⁵ | |
| 15 min @ 170°C | 63 | 9.0 / 54 | |
| 15min @ 180°C | 66 | 9.4 / 54 | |
| 15 min @ 190°C | 63 | 10 / 54 | |
| 15 min @ 200°C | 64 | 9.4 / 53 | |
| | | | |

| Curing conditions | Acetone resistance | Intendation⁶ (mm) | |
|---|---|---|---|
| 15 min @ 170°C | 2 / m | 6.3 | |
| 15 min @ 180°C | 1 / m | 7.3 | |
| 15 min @ 190°C | 1 / lm | 7.5 | |
| 15 min @ 200°C | 1 / m | 7.5 | |
| | | | |

| **Aluminum panel** [bonder 722] | Film thickness [µm] | Gloss 60° / 85°⁵ | Impact⁷ [inch-pounds] |
|---|---|---|---|
| 10 min @ 200°C | 50 | 7.4 / 49 | 40 |
| 15 min @ 200°C | 50 | 7.5 / 50 | 50 |

| | | | |
|---|---|---|---|
| ⁵ determined according to ASTM D523 using a MICRO-TRI-GLOSS^{®} Gloss Meter (Model 4520) available from BYK-Gardner GmbH, Geretaried, Germany. ⁶ determined according to DIN EN ISO 1520. ⁷ determined according to ASTM D2794. | | | |

### Example 2a

### Continuous process using a continuous reactor with actively moving mixer elements, i.e., an extruder.

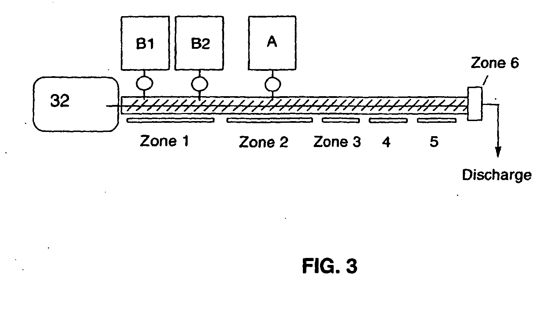

A Wemer & Pfleiderer ZSK 53, twin screw extruder was used in a setup shown in FIG. 3. Three components (A, B1, and B2) were added using a pump. Component B1 was ε-caprolactam, which was added in the molten form, component B2 was dimethylolpropionic acid which was added with a powder feeder and component A was the same as in example 1a. The ratios of all components was also the same as in example 1a.

Six temperature controllers were used to adjust the temperature in the extruder. Zones 1 and 2 were set to 200 °C, zone 3 ranged from 155-170 °C, zone 4 ranged from 150-165 °C and zones 5 and 6 ranged from 140-160 °C. The extruder screw, driven by motor 32 was set to 292 rpm. The throughput rate was 80-100 lbs/hr. The discharge temperature of the product was determined to be 170 °C. The Tg of the final product was 57-62 °C, the NCO ranged from 0.30-0.34%, and the acid number ranged from 62.0-72.5 mg KOH/g.

### Example 2b

### Testing of the crosslinker made in Example 2a.

Three samples of the product obtained in Examples 2a were tested with RUCOTE^{®} 194, a solid polyesterpolyol available from Bayer Material Science, Pittsburgh, PA having a OH number of 45 mg KOH/g. The test formulations are shown in the table below.

| Test Formulations | Wt. %-A | Wt. %-B | Wt. %-C |
|---|---|---|---|
| RUCOTE^{®} 194 | 46.43 | 46.43 | 46.43 |
| Example 2a, sample 1 | 14.85 | -------- | -------- |
| Example 2a, sample 2 | ------- | 14.85 | -------- |
| Example 2a, sample 3 | -------- | ------ | 14.85 |
| Triglycidyl isocyanate (TGIC) | 1.72 | 1.72 | 1.72 |
| Blanc Fixe | 33.50 | 33.50 | 33.50 |
| RESIFLOW^{®} PV88² | 1.50 | 1.50 | 1.50 |
| Raven^{™} 450⁶ | 1.50 | 1.50 | 1.50 |
| Benzoin | 0.50 | 0.50 | 0.50 |

| | | | |
|---|---|---|---|
| ² Estron Chemical, Inc., Calvert City, KY ⁶ Raven 450 is a carbon black available from Columbian Chemicals Co., Marietta, GA | | | |

Extrusion conditions: zone 1= 90C, zone 2= 90C, RPM= 250, % Torque = 80-60 double pass extrusion.

### Test Results:

| Item | 60 degree gloss | Bake |
|---|---|---|
| Formulation Example 2b-A | 3.0 | 15'/200 °C |
| Formulation Example 2b-B | 6.1 | 15'/200 °C |
| Formulation Example 2b-C | 6.9 | 15'/200 °C |

As can be seen from examples 1 b and 2b, the product performance is excellent. Both methods have proven to produce a matte crosslinker for a consistent low gloss powder coating.

## Claims

1. A continuous process for making an acid functional blocked Isocyanate comprising continuously feeding and mixing
a) one or more polyisocyanates;
b) one or more hydroxycarboxylic acids; and
c) one or more other isocyanate blocking agent;
in a reactor at from 100-240°C.

2. The process according to Claim 1, wherein the polyisocyanate is one or more polyisocyanates according to the formula
OCN-R¹-NCO
wherein R¹ is a linking group selected from C₂ to C₂₄ linear, branched, or cyclic aliphatic, aromatic or araliphatic groups.

3. The process according to Claim 1, wherein the polyisocyanate is selected from the group consisting of 1,2-ethylene-diisocyanate, 1,4-tetramethylenediisocyanate, 1,6- hexamethylenediisocyanate, 2,2,4- and 2,4,4-trimethyl-1,6-hexamethylenediisocyanate, 1,12-dodecandiisocyanate, ω,ω-diisocyanatodipropylether, cyclobutan-1,3-diisocyanate, cyclohexan-1,3- and 1,4-diisocyanate, 2,4- and 2,6-diisocyanato-1-methylcylcohexane, 3-isocyanatomethyl-3,5,5-trimethylcyclohexylisocyanate ("isophoronediisocyanate"), 2,5- and 3,5-bis-(isocyanatomethyl)-8-methyl-1,4-methano,decahydronaphthathalin, 1,5-, 2,5-, 1,6- and 2,6-bis-(isocyanatomethyl)-4,7-methanohexahydroindan, 1,5-, 2,5-, 1,6- and 2,6-bis-(isocyanato)-4,7-methanohexahydroindan, dicyclohexyl-2,4'- and 4,4'-diisocyanate, ω,ω-diisocyanato-1,4-diethylbenzene, 1,3- and 1,4-phenylenediisocyanate, 4,4'-diisocyanatodiphenyl, 4,4'-diisocyanato-3,3'-dichlorodiphenyl, 4,4'-diisocyanato-3,3'methoxy-diphenyl, 4,4'-diisocyanato-3,3-dimethyl-diphenyl, 4,4'-diisocyanato-3,3'-diphenyl-diphenyl, naphthalene-1,5-diisocyanate, 2,4-and 2,6-toluenediisocyanate, N-N'-(4,4'-dimethyl-3,3'-diisocyanatodiphenyl)-uretdion, m-xylylene-diisocyanate, 2,2'-, 2,4'- and 4,4'-dicyclohexylmethane, 2,4,4'-triisocyanatano-diphenylether, 4,4',4"-triisocyanatotriphenylmethane, tris(4-isocyanatophenyl)-thiophosphate and mixtures thereof.

4. The process according to Claim 1, wherein the hydroxycarboxylic acid is one or more compounds according to the formula
(HO₂C)ₘ-X-[OH]_{q}
wherein X represents a C₂ to C₂₈ linear, branched, or cyclic aliphatic, aromatic or araliphatic linking group having (m+q) functional groups or a polyester with a number average molecular weight of 154 to 1500;
m is an integer of from 1 to 3; and
q is an integer of from 1 to 4.

5. The process according to Claim 1, wherein the hydroxycarboxylic acid is selected from the group consisting of polymers containing OH and carboxylic acid groups, glycolic acid, salicylic acid, malic acid, 2,3-dihydroxy butanedioc acid, bis-(4-hydroxyphenyl)-alkanoic acids, and dialkyolalkanoic acids, dimethylolhexanoic acid and combinations thereof

6. The process according to Claim 1, wherein the blocking agent is one or more compounds according to the formula
R²-Z
wherein R² is selected from C₂ to C₂₄ linear, branched, or cyclic aliphatic, aromatic or araliphatic groups and Z is an active hydrogen containing group selected from hydroxyl, mercaptan, oxime, lactam, triazole, pyrazole, secondary amines, malonic esters, acetylacetic acid esters, and cyclopentanone esters.

7. The process according to Claim 1, wherein the acid functional blocked Isocyanate has a structure according to the formula
(HO₂C)ₘ-X-[(O-(C=O)-NH)ₙ-R-(NH-(CO)-Z)ₚ]_{q}
wherein
X represents a C₂ to C₂₈ linear, branched, or cyclic aliphatic, aromatic or araliphatic linking group having (m+q) functional groups or a polyester with a number average molecular weight of 154 to 1500 with a formal elimination of the OH and acid functional groups;
R represents a C₂ to C₁₈ linear, branched, or cyclic aliphatic, aromatic or araliphatic linking group having (n+p) functional groups;
Z represents a C₁-C₃₂ linear, branched or cyclic aliphatic or aromatic group containing an active hydrogen group with the active hydrogen removed;
m represents an integer number ranging from 1-3;
n represents an integer number ranging from 1-4;
p represents an integer number ranging from 1-5; and
q represents an integer number ranging from 1-4; and
the sum of p+q is larger than 2.

8. The process according to Claim 1, wherein a), b) and/or c) are mixed using a mixing element selected from at least one Y-shaped tube, a mixing unit with at least one static mixer element, a mixing unit with actively stirring mixing elements and combinations thereof

9. The process according to Claim 1, wherein the reaction after mixing is performed in a tube with or without static mixing elements and/or in an extruder which directly acts as a mixing element and/or a belt.

10. The process according to Claim 1, wherein the order of addition of at least two of components a), b) and/or c) is performed by adding the components in any sequential order, simultaneous order or by utilizing any prestage process to solubilize or react any of the components before adding them together.

11. The process according to Claim 1, wherein a) is selected from a diisocyanate, a polyisocyanate, a mixture of different diisocyanate, a mixture of different polyisocyanate, and a mixture of different diisocyanate and polyisocyanates; and b) is selected from a monomeric hydroxycarboxylic acid, a polymer containing OH and acid groups, a mixture of monomeric hydroxycarboxylic acids, and mixtures of monomeric hydroxycarboxylic acids with polymers containing OH and acid groups; and c) is a blocking agent for isocyanates of the groups selected from oximes, mercaptans, lactams, malonic esters, acetylacetic acid esters and mixtures thereof.

12. The process according to Claim 11, wherein any of a), b) and c) are combined in a prestage process to form one component.

13. The process according to Claim 11, wherein any of a), b) and c) are divided into subcomponents.

14. The process according to Claim 11, wherein component a) is a mixture of 1,6-hexamethylenediisocyanate and isophoronediisocyanate; component b) is dimethylpropionic acid; and component c) is ε-caprolactam.

15. The process according to Claim 1, wherein the process performed in a tube reactor with static mixing elements.

16. The process according to Claim 1, wherein the process is performed in an extruder.

17. The process according to Claim 1 further comprising mixing, with a), b) and c), d) a catalyst selected from Lewis acids, monoalkyltintricarboxylates, trialkyltinmonocarboxylates, zinc carboxylates, bismuth salts, dialkyltin dicarboxylates, and aromatic amines.

## Patentansprüche

1. Kontinuierliches Verfahren zur Herstellung eines säurefunktionellen blockierten Isocyanats, bei dem man
a) ein oder mehrere Polyisocyanate;
b) eine oder mehrere Hydroxycarbonsäuren und
c) ein oder mehrere andere Isocyanatblockierungsmittel
in einen Reaktor bei 100-240°C einträgt und mischt.

2. Verfahren nach Anspruch 1, bei dem es sich bei dem Polyisocyanat um ein oder mehrere Polyisocyanate der Formel
OCN-R¹-NCO
worin R¹ für eine Verknüpfungsgruppe steht, die unter linearen, verzweigten oder cyclischen aliphatischen, aromatischen oder araliphatischen C₂- bis C₂₄-Gruppen ausgewählt ist, handelt.

3. Verfahren nach Anspruch 1, bei dem man das Polyisocyanat aus der Gruppe bestehend aus 1,2-Ethylendiisocyanat, 1,4-Tetramethylendiisocyanat, 1,6-Hexamethylendiisocyanat, 2,2,4- und 2,4,4-Trimethyl-1,6-hexamethylendiisocyanat, 1,12-Dodecandiisocyanat, ω,ω-Diisocyanatodipropylether, Cyclobutan-1,3-diisocyanat, Cyclohexan-1,3- und Cyclohexan-1,4-diisocyanat, 2,4- und 2,6-Diisocyanato-1-methylcyclohexan, 3-Isocyanatomethyl-3,5,5-trimethylcyclohexylisocyanat ("Isophorondiisocyanat"), 2,5- und 3,5-Bis-(isocyanatomethyl)-8-methyl-1,4-methanodecahydronaphthalin, 1,5-, 2,5-, 1,6- und 2,6-Bis(isocyanatomethyl)-4,7-methanohexahydroindan, 1,5-, 2,5-, 1,6- und 2,6-Bis(isocyanato)-4,7-methanohexahydroindan, Dicyclohexyl-2,4'- und Dicyclohexyl-4,4'-diisocyanat, ω,ω-Diisocyanato-1,4-diethylbenzol, 1,3-und 1,4-Phenylendiisocyanat, 4,4'-Diisocyanatodiphenyl, 4,4'-Diisocyanato-3,3'-dichlordiphenyl, 4,4'-Diisocyanato-3,3'-methoxydiphenyl, 4,4'-Diisocyanato-3,3-dimethyldiphenyl, 4,4'-Diisocyanato-3,3'-diphenyldiphenyl, Naphthylen-1,5-diisocyanat, 2,4- und 2,6-Toluylen-diisocyanat, N,N'-(4,4'-Dimethyl-3,3'-diisocyanatodiphenyl)-uretdion, m-Xylylendiisocyanat, 2,2'-, 2,4'- und 4,4'- Dicyclohexylmethan, 2,4,4'-Triisocyanatodiphenylether, 4,4',4''-Triisocyanatotriphenylmethan, Tris(4-isocyanatophenyl)thiophosphat und Mischungen davon auswählt.

4. Verfahren nach Anspruch 1, bei dem es sich bei der Hydroxycarbonsäure um eine oder mehrere Verbindungen der Formel
(HO₂C)ₘ-X- [OH] q
worin X für eine lineare, verzweigte oder cyclische aliphatische, aromatische oder araliphatische C₂- bis C₂₈-Verknüpfungsgruppe mit (m+q) funktionellen Gruppen oder einen Polyester mit einem zahlenmittleren Molekulargewicht von 154 bis 1500 steht;
m für eine ganze Zahl von 1 bis 3 steht und
q für eine ganze Zahl von 1 bis 4 steht, handelt.

5. Verfahren nach Anspruch 1, bei dem man die Hydroxycarbonsäure aus der Gruppe bestehend aus OH- und Carbonsäuregruppen enthaltenden Polymeren, Glykolsäure, Salicylsäure, Äpfelsäure, 2,3-Dihydroxybutandisäure, Bis(4-hydroxyphenyl)alkansäuren und Dialkylolalkansäuren, Dimethylolhexansäure und Kombinationen davon auswählt.

6. Verfahren nach Anspruch 1, bei dem es sich bei dem Blockierungsmittel um eine oder mehrere Verbindungen der Formel
R²-Z
worin R² unter linearen, verzweigten oder cyclischen aliphatischen, aromatischen oder araliphatischen C₂- bis C₂₄-Gruppen ausgewählt ist und Z für eine aktiven Wasserstoff enthaltende Gruppe, die unter Hydroxyl, Mercaptan, Oxim, Lactam, Triazol, Pyrazol, sekundären Aminen, Malonsäureestern, Acetylessigsäureestern und Cyclopentanonestern ausgewählt ist, steht, handelt.

7. Verfahren nach Anspruch 1, bei dem das säurefunktionelle Isocyanat eine Struktur der Formel
(HO₂C)ₘ-X-[(O-(C=O)-NH)ₙ-R-(NH-(CO)-Z)ₚ]_{q} worin
X für eine lineare, verzweigte oder cyclische aliphatische, aromatische oder araliphatische C₂- bis C₂₈-Verknüpfungsgruppe mit (m+q) funktionellen Gruppen oder einen Polyester mit einem zahlenmittleren Molekulargewicht von 154 bis 1500 mit formaler Eliminierung der OH- und säurefunktionellen Gruppen steht;
R für eine lineare, verzweigte oder cyclische aliphatische, aromatische oder araliphatische C₂- bis C₁₈-Verknüpfungsgruppe mit (n+p) funk- tionellen Gruppen steht;
Z für eine lineare, verzweigte oder cyclische aliphatische, aromatische oder araliphatische C₁-C₃₂-Gruppe, die eine aktiven Wasserstoff enthaltende Gruppe ohne den aktiven Wasserstoff enthält, steht;
m für eine ganze Zahl von 1-3 steht;
n für eine ganze Zahl von 1-4 steht;
p für eine ganze Zahl von 1-5 steht und
q für eine ganze Zahl von 1-4 steht und die Summe von p+q größer als 2 ist;
aufweist.

8. Verfahren nach Anspruch 1, bei dem man a), b) und/oder c) unter Verwendung eines unter mindestens einem Y-förmigen Rohr, einer Mischeinheit mit mindestens einem statischen Mischerelement, einer Mischeinheit mit aktiv rührenden Mischelementen und Kombinationen davon ausgewählten Mischelements mischt.

9. Verfahren nach Anspruch 1, bei dem man die Reaktion nach dem Mischen in einem Rohr mit oder ohne statische Mischelemente und/oder in einem Extruder, der direkt als Mischelement dient, und/oder einem Band durchführt.

10. Verfahren nach Anspruch 1, bei dem man die Zugabe von mindestens zwei der Komponenten a), b) und/oder c) durchführt, indem man die Komponenten in einer beliebigen sequentiellen Reihenfolge oder gleichzeitigen Reihenfolge oder durch Verwendung eines beliebigen Vorstufenverfahrens zur Solubilisierung oder Umsetzung beliebiger der Komponeneten vor dem Zusammengeben zugibt.

11. Verfahren nach Anspruch 1, bei dem man a) unter einem Diisocyanat, einem Polyisocyanat, einer Mischung von verschiedenen Diisocyanaten, einer Mischung von verschiedenen Polyisocyanaten und einer Mischung von verschiedenen Diisocyanaten und Polyisocyanaten auswählt und b) unter einer monomeren Hydroxycarbonsäure, einem OH- und Säuregruppen enthaltenden Polymer, einer Mischung von monomeren Hydroxycarbonsäuren und Mischungen von monomeren Hydroxycarbonsäuren mit OH- und Säuregruppen enthaltenden Polymeren auswählt und es sich bei c) um ein Blockierungsmittel für Isocyanate aus den unter Oximen, Mercaptanen, Lactamen, Malonsäureestern, Acetylessigsäureestern und Mischungen davon ausgewählten Gruppen handelt.

12. Verfahren nach Anspruch 11, bei dem man beliebige der Komponenten a), b) und c) in einem Vorstufenverfahren zu einer einzigen Komponente vereinigt.

13. Verfahren nach Anspruch 11, bei dem man beliebige der Komponenten a), b) und c) in Unterkomponenten unterteilt.

14. Verfahren nach Anspruch 11, bei dem es sich bei Komponente a) um eine Mischung von 1,6-Hexamethylendiisocyanat und Isophorondiisocyanat, bei Komponente b) um Dimethylpropionsäure und bei Komponente c) um ε-Caprolactam handelt.

15. Verfahren nach Anspruch 1, das man in einem Rohrreaktor mit statischen Mischelementen durchführt.

16. Verfahren nach Anspruch 1, das man in einem Extruder durchführt.

17. Verfahren nach Anspruch 1, bei dem man ferner d) einen unter Lewis-Säuren, Monoalkylzinntricarboxylaten, Trialkylzinnmonocarboxylaten, Zinkcarboxylaten, Bismutsalzen, Dialkylzinndicarboxylaten und aromatischen Aminen ausgewählten Katalysator mit a), b) und c) mischt.

## Revendications

1. Procédé continu pour la préparation d'un isocyanate bloqué à fonctionnalité acide comprenant l'alimentation et le mélange en continu
a) d'un ou de plusieurs polyisocyanates ;
b) d'un ou de plusieurs acides hydroxycarboxyliques ; et
c) d'un ou de plusieurs autres agents de blocage d'isocyanate ;
dans un réacteur à 100-240°C.

2. Procédé selon la revendication 1, où le polyisocyanate est un ou plusieurs polyisocyanates selon la formule
OCN-R¹-NCO
où R¹ représente un groupe de liaison choisi parmi des groupes aliphatiques linéaires, ramifiés ou cycliques, aromatiques ou araliphatiques en C₂ à C₂₄.

3. Procédé selon la revendication 1, où le polyisocyanate est choisi dans le groupe constitué par le 1,2-éthylènediisocyanate, le 1,4-tétraméthylènediisocyanate, le 1,6-hexaméthylènediisocyanate, le 2,2,4-triméthyl-1,6-hexaméthylènediisocyanate et le 2,4,4-triméthyl-1,6-hexaméthylènediisocyanate, le 1,12-dodécanediisocyanate, l'ω,ω-diisocyanatodipropyléther, le cyclobutane-1,3-diisocyanate, le cyclohexane-1,3-diisocyanate et le cyclohexane-1,4-diisocyanate, le 2,4-diisocyanato-1-méthylcyclohexane et le 2,6-diisocyanato-1-méthylcyclohexane, le 3-isocyanatométhyl-3,5,5-triméthylcyclohexylisocyanate ("isophoronediisocyanate"), le 2,5-bis-(isocyanatométhyl)-8-méthyl-1,4-méthanodécahydronaphtalène et le 3,5-bis-(isocyanatométhyl)-8-méthyl-1,4-méthanodécahydronaphtalène, le 1,5-bis-(isocyanatométhyl)-4,7-méthanohexahydro-indane, le 2,5-bis-(isocyanatométhyl)-4,7-méthanohexahydro-indane, le 1,6-bis-(isocyanatométhyl)-4,7-méthanohexahydro-indane et le 2,6-bis-(isocyanatométhyl)-4,7-méthanohexahydroindane, le 1,5-bis-(isocyanato)-4,7-méthanohexahydroindane, le 2,5-bis-(isocyanato)-4,7-méthanohexahydroindane, le 1,6-bis-(isocyanato)-4,7-méthanohexahydroindane et le 2,6-bis-(isocyanato)-4,7-méthanohexahydroindane, le dicyclohexyl-2,4'-diisocyanate et le dicyclohexyl-4,4'-diisocyanate, l'ω,ω-diisocyanato-1,4-diéthylbenzène, le 1,3-phénylènediisocyanate et le 1,4-phénylènediisocyanate, le 4,4'-diisocyanatodiphényle, le 4,4'-diisocyanato-3,3'-dichlorodiphényle, le 4,4'-diisocyanato-3,3'méthoxy-diphényle, le 4,4'-diisocyanato-3,3-diméthyl-diphényle, le 4,4'-diisocyanato-3,3'-diphényl-diphényle, le naphtalène-1,5-diisocyanate, le 2,4-toluènediisocyanate et le 2,6-toluènediisocyanate, la N-N'-(4,4'-diméthyl-3,3'-diisocyanatodiphényl)-uretdione, le m-xylylène-diisocyanate, le 2,2'-dicyclohexylméthane, le 2,4'-dicyclohexylméthane et le 4,4'-dicyclohexylméthane, le 2,4,4'-triisocyanatano-diphényléther, le 4,4',4"-triisocyanatotriphénylméthane, le tris(4-isocyanatophényl)-thiophosphate et leurs mélanges.

4. Procédé selon la revendication 1, où l'acide hydroxycarboxylique est un ou plusieurs composés selon la formule
(HO₂C)ₘ-X-[OH]_{q}
où X représente un groupe de liaison aliphatique linéaire, ramifié ou cyclique, aromatique ou araliphatique en C₂ à C₂₈ présentant (m+q) groupes fonctionnels ou un polyester présentant un poids moléculaire numérique moyen de 154 à 1500 ;
m représente un entier de 1 à 3 ; et
q représente un entier de 1 à 4.

5. Procédé selon la revendication 1, où l'acide hydroxycarboxylique est choisi dans le groupe constitué par des polymères contenant des groupes OH et acide carboxylique, l'acide glycolique, l'acide salicylique, l'acide malique, l'acide 2,3-dihydroxybutanedioïque, les acides bis-(4-hydroxyphényl)-alcanoïques et les acides dialkylolalcanoïques, l'acide diméthylolhexanoïque et les combinaisons de ceux-ci.

6. Procédé selon la revendication 1, où l'agent de blocage est un ou plusieurs composés selon la formule
R²-Z
où R² est choisi parmi des groupes aliphatiques linéaires, ramifiés ou cycliques, aromatiques ou araliphatiques en C₂ à C₂₄ et Z représente un groupe contenant de l'hydrogène actif choisi parmi hydroxyle, mercaptan, oxime, lactame, triazole, pyrazole, amines secondaires, esters maloniques, esters de l'acide acétylacétique et esters de cyclopentanone.

7. Procédé selon la revendication 1, où l'isocyanate bloqué à fonctionnalité acide présente une structure selon la formule
(HO₂C)ₘ-X-[(O-(C=O)-NH)ₙ-R-(NH-(CO)-Z)ₚ]_{q} où
X représente un groupe de liaison aliphatique linéaire, ramifié ou cyclique, aromatique ou araliphatique en C₂ à C₂₈ présentant (m+q) groupes fonctionnels ou un polyester présentant un poids moléculaire numérique moyen de 154 à 1500 avec une élimination formelle des groupes OH et à fonctionnalité acide ;
R représente un groupe de liaison aliphatique linéaire, ramifié ou cyclique, aromatique ou araliphatique en C₂ à C₁₈ présentant (n+p) groupes fonctionnels ;
Z représente un groupe aliphatique linéaire, ramifié ou cyclique ou aromatique en C₁-C₃₂ contenant un groupe hydrogène actif, l'hydrogène actif étant éliminé ;
m représente un nombre entier dans la plage de 1-3 ;
n représente un nombre entier dans la plage de 1-4 ;
p représente un nombre entier dans la plage de 1-5 ; et
q représente un nombre entier dans la plage de 1-4 ; et
la somme de p+q est supérieure à 2.

8. Procédé selon la revendication 1, où a), b) et/ou c) sont mélangés en utilisant un élément de mélange choisi parmi au moins un tube en forme de Y, une unité de mélange avec au moins un élément de mélangeur statique, une unité de mélange avec des éléments de mélange à agitation active et les combinaisons de ceux-ci.

9. Procédé selon la revendication 1, où la réaction après le mélange est réalisée dans un tube avec ou sans éléments de mélange statique et/ou dans une extrudeuse qui agit directement comme un élément de mélange et/ou une bande.

10. Procédé selon la revendication 1, où l'ordre d'ajout d'au moins deux des composants a), b) et/ou c) est réalisé en ajoutant les composants en un quelconque ordre séquentiel, ordre simultané ou en utilisant un quelconque procédé préalable pour solubiliser ou faire réagir n'importe lequel des composants avant de les ajouter ensemble.

11. Procédé selon la revendication 1, où a) est choisi parmi un diisocyanate, un polyisocyanate, un mélange de différents diisocyanates, un mélange de différents polyisocyanates et un mélange de différents diisocyanates et polyisocyanates ; et b) est choisi parmi un acide hydroxycarboxylique monomère, un polymère contenant des groupes OH et acides, un mélange d'acides hydroxycarboxyliques monomères et des mélanges d'acides hydroxycarboxyliques monomères avec des polymères contenant des groupes OH et acides ; et c) représente un agent de blocage pour les isocyanates des groupes choisis parmi les oximes, les mercaptans, les lactames, les esters maloniques, les esters de l'acide acétylacétique et leurs mélanges.

12. Procédé selon la revendication 11, où n'importe lesquels parmi a), b) et c) sont combinés dans un procédé préalable pour former un composant.

13. Procédé selon la revendication 11, où n'importe lesquels parmi a), b) et c) sont répartis en sous-composants.

14. Procédé selon la revendication 11, où le composant a) est un mélange de 1,6-hexaméthylènediisocyanate et d'isophoronediisocyanate ; le composant b) est l'acide diméthylpropionique ; et le composant c) est l'ε-caprolactame.

15. Procédé selon la revendication 1, où le procédé est réalisé dans un réacteur tubulaire avec des éléments de mélange statique.

16. Procédé selon la revendication 1, où le procédé est réalisé dans une extrudeuse.

17. Procédé selon la revendication 1 comprenant outre le mélange, avec a), b) et c), d) d'un catalyseur choisi parmi les acides de Lewis, les tricarboxylates de monoalkylétain, les monocarboxylates de trialkylétain, les carboxylates de zinc, les sels de bismuth, les dicarboxylates de dialkylétain, et les amines aromatiques.
